# EUROPEAN PATENT SPECIFICATION

(11) **EP 2 982 154 B1**
(45) Date of publication and mention of the grant of the patent: **15.08.2018**
(21) Application number: 13880810.0
(22) Date of filing: 17.12.2013
(51) Int. Cl.: H04W 24/08, H04W 76/19, H04L 5/00

(54) **RADIO LINK MONITORING FOR EPDCCH**
FUNKVERBINDUNGSÜBERWACHUNG FÜR EPDCCH
SURVEILLANCE DE LIAISON RADIO POUR EPDCCH

(30) Priority: 04.04.2013 US 201361808597 P
(43) Date of publication of application: 10.02.2016
(73) Proprietor: Intel IP Corporation, Santa Clara, CA 95054 (US)
(72) Inventor: ZHANG, Yujian, Beijing 100081 (CN); YIU, Candy, Portland, Oregon 97201 (US); PINHEIRO, Ana Lucia, Breinigsville, Pennsylvania 18031 (US); HE, Hong, Beijing 100190 (CN); FONG, Mo-Han, Sunnyvale, California 94087 (US)
(74) Representative: Rummler, Felix
(86) International application number: PCT/US2013/075726
(87) International publication number: WO 2014/163686

(56) References cited:
- WO-A1-2012/149898
- WO-A2-2012/148195
- WO-A2-2013/015588
- US-A1- 2010 113 008
- US-A1- 2011 021 154
- US-A1- 2011 217 973
- US-A1- 2011 256 861
- US-A1- 2013 051 214
- ERICSSON ET AL: "RLF and RLM on SCells", 3GPP DRAFT; R2-121553 - RLF AND RLM ON SCELLS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, South Korea; 20120326 - 20120330, 20 March 2012 (2012-03-20), XP050606349, [retrieved on 2012-03-20]

## Description

### TECHNICAL FIELD

Examples generally relate to Radio Link Monitoring (RLM) and more specifically to RLM in a system or technique using an Enhanced Physical Downlink Control Channel (EPDCCH) transmission.

### TECHNICAL BACKGROUND

A cellular network, such as a Long Term Evolution (LTE) network, can include one or more macro cells or small cells. Including one or more small cells can help increase network user capacity in geographic locations with high User Equipment (UE) loads or can help extend a transmission area of the macro cell. Networks containing one or more macro cells and small cells arranged in more than one layer of the network are known as Heterogeneous Networks (HetNets). Multiple frequencies can be transmitted among one or more Enhanced Node Bs (eNodeBs) within the HetNet, such as to help avoid inter-cell interference.

US 2011/021154 A1 relates to monitoring for a radio link failure in an LTE-A system using PDCCH. The disclosure includes criteria for determining radio link failure, recovery events, and the actions that a wireless transmit/receive unit (WTRU) may take upon the occurrence of such events. The method comprises determining a primary downlink (DL) carrier among a set of component carriers configured or activated for the WTRU, counting out-of-synch indications from the primary DL carrier using a first counter in the WTRU, initiating a recovery timer in the WTRU on a condition that a predefined number of out-of-synch indications from the primary DL carrier was counted, as determined by the first counter; and counting in-synch indications from the primary DL carrier using a second counter in the WTRU.

EP 2738950 A2 relates to monitoring of a wireless link in a wireless communication system. The disclosed method comprises the steps of receiving a precoded control channel, and estimating the quality of the wireless link for the received precoded control channel, wherein the quality of the wireless link can be estimated on the basis of an assumption by the terminal regarding the precoding applied to the precoded control channel.

### SUMMARY OF THE INVENTION

The present invention is defined by the features of the independent claims. Preferred embodiments thereof are defined by features of the dependent claims.

### BRIEF DESCRIPTION OF THE DRAWINGS

In the drawings, which are not necessarily drawn to scale, like numerals can describe similar components in different views. Like numerals having different letter suffixes can represent different instances of similar components. The drawings illustrate generally, by way of example, but not by way of limitation, various embodiments discussed in the present document.
FIG. 1 illustrates an example of a cellular network.
FIG. 2A illustrates an example of a transmission that includes one or more radio frames.
FIG. 2B illustrates an example of a transmission radio frame that includes one or more subframes.
FIG. 2C illustrates an example of a transmission subframe that includes an EPDCCH transmission.
FIG. 3 illustrates an example of a technique for performing RLM based on a transmission.
FIG. 4 illustrates a graph of a series of theoretical transmissions received at a UE.
FIG. 5 illustrates an example of a computer system configured to implement one or more techniques or methodologies discussed herein.

### DESCRIPTION OF EMBODIMENTS

In the following detailed description, reference is made to the accompanying drawings that form a part hereof, and in which is shown by way of illustration specific embodiments in which the apparatuses, systems, or methods can be practiced. These embodiments are described in sufficient detail to enable those skilled in the art to practice them, and it is to be understood that other embodiments can be utilized and that structural, logical, and electrical changes can be made without departing from the scope of the apparatuses, systems, or methods. Such embodiments can be referred to, individually and/or collectively. The following description is, therefore, not to be taken in a limited sense. The scope of the disclosed subject matter is defined by the appended claims.

A Heterogeneous Network (HetNet) can increase system capacity (e.g., user throughput) of a cellular network, such as a Long Term Evolution (LTE) network or a Long Term Evolution-Advanced (LTE-A) network. Providing a seamless connection (e.g., reduced handover time between cells) to a User Equipment (UE) moving in or out of one or more macro cells or small cells can be challenging. Release 11 of the LTE-A standardization introduced Enhanced Physical Downlink Control Channel (EPDCCH) functionality to help reduce the handover time. The EPDCCH transmission can provide improved functionality (e.g., reduced interference and greater control of signal resources) over previous versions of LTE standardization, such as the versions that utilize Physical Downlink Control Channel (PDCCH) functionality. The improved functionality provided by the EPDCCH transmission can include additional control channel resource elements, such as for providing more coordination of the LTE-A transmission resource elements 212 in an available range of frequencies. The additional control channel resource elements can provide increased control channel flexibility, such as allowing control channel resource elements to be transmitted in symbols not previously allocated for the PDCCH transmission. The EPDCCH transmission can be scheduled in a resource element of a different frequency or time than the PDCCH transmission, such as to help reduce interference with the PDCCH transmission of another eNodeB. Additionally or alternatively, the EPDCCH transmission can be scheduled in a resource element of a different frequency or time than another EPDCCH transmission or a PDSCH transmission, such as to help reduce interference with the EPDCCH transmission of another eNodeB or to help reduce interference with the PDSCH transmission of another eNodeB.

Radio Link Monitoring (RLM) in Release 11 of LTE-A is based upon a quality level of a PDCCH transmission. The quality level of the PDCCH transmission can be determined by comparing the PDCCH transmission to a hypothetical PDCCH transmission. A poor PDCCH transmission quality may not indicate poor EPDCCH transmission quality.

A UE can be configured to perform RLM on an EPDCCH transmission, such as by assessing the EPDCCH transmission quality. An advantage of configuring RLM to be based on the EPDCCH transmission quality can be a reduction in UE service interruptions. Fewer service interruptions can be achieved, such as by reducing the number of RLFs declared. Performing RLM based on the EPDCCH transmission quality can provide a more accurate method of indicating UE radio link quality or of determining if an RLF has occurred in a cellular network utilizing the EPDCCH transmission. The EPDCCH transmission quality can be determined, such as by comparing the at least a portion of the EPDCCH transmission to a hypothetical PDCCH transmission or a hypothetical EPDCCH transmission. Different portions of the EPDCCH transmission can be compared to the hypothetical PDCCH transmission or hypothetical EPDCCH transmission, respectively. For example, the PDCCH symbol portion of the transmission can be compared to a hypothetical PDCCH symbol transmission or the EPDCCH symbol portion of the transmission can be compared to a hypothetical EPDCCH symbol transmission.

A variety of parameters can be used for RLM, such as a threshold value at which the EPDCCH transmission cannot be reliably received or a threshold value at which the EPDCCH transmission can be received more reliably. An EPDCCH transmission can be more reliably received than a PDCCH transmission and as a result can reduce unnecessary RLF. One reason for the higher reliability of the EPDCCH transmission is that Inter-Cell Interference Coordination (ICIC) can be applied to the EPDCCH transmission.

Examples in this disclosure relate to apparatuses, systems, techniques and software configured to perform RLM based on an EPDCCH transmission. Examples will now be described with reference to the FIGS.

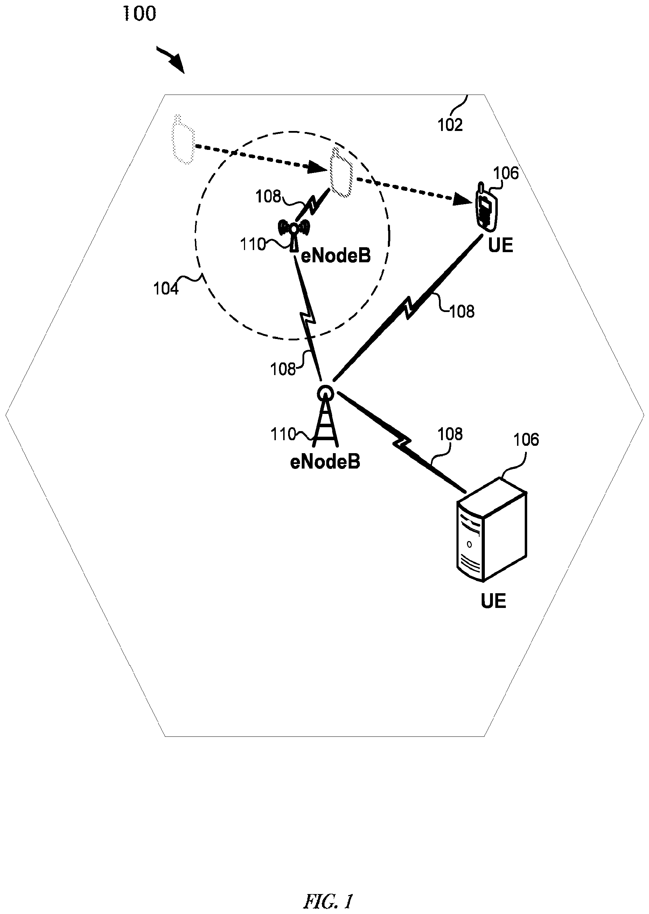

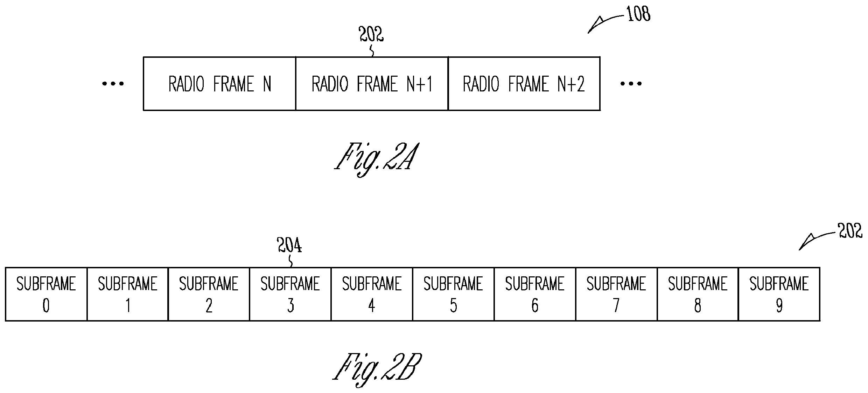

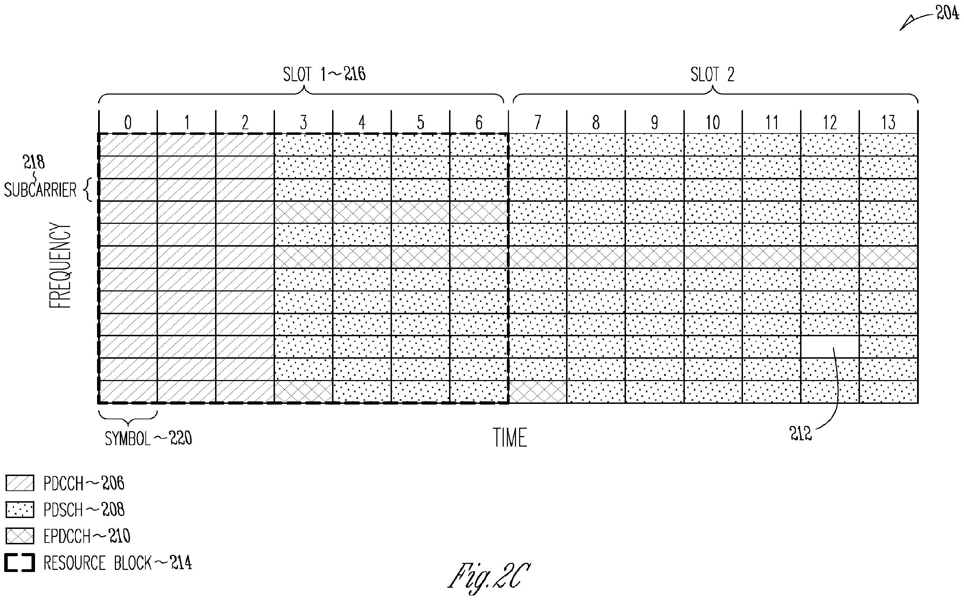

FIG. 1 shows an example of a cellular network 100 (e.g., an LTE network, an LTE-A network, a HetNet, or other cellular network). The network 100 can include one or more macro cells 102. The network 100 can include one or more small cells 104. The small cell 104 can be deployed within the macro cell 102. An Enhanced Node B (eNodeB) 110 can send or receive an LTE-A transmission 108, such as to a UE 106 within the macro cell 102 or small cell 104. One or more UEs 106 can be located within the macro cell 102 or small cell 104 simultaneously. The UE 106 can be communicatively coupled (e.g., connected) to the network 100, such as through the eNodeB 110 of the macro cell 102 or the small cell 104. The UE 106 can be connected to a single cell (e.g., macro cell 102 or small cell 104), such as when the UE 106 is operating in a Radio Resource Control (RRC) connected state (e.g., the eNodeB 110 has assigned the identity of the UE 106 or configured the UE 106 to perform measurement reporting). The cell can be defined as a Primary Cell (PCell) if the UE 106 is communicating (e.g., transmitting or receiving an LTE-A transmission 108) with that cell in the RRC connected state, such as communicating on a first frequency. The UE 106 can communicate with up to four Secondary Cells (SCells), such as communicating using a second frequency different than the first frequency. The UE 106 can perform RLM based on an EPDCCH transmission 210 (see FIG. 2) from the PCell (e.g., macro cell 102 or small cell 104).

The eNodeB 110 can be a hardware implemented access point of an Evolved Universal Terrestrial Access Network (E-UTRAN). The E-UTRAN can be the access architecture of the cellular network 100 (e.g., LTE-A network, HetNet, or other cellular network). The eNodeB 110 can be configured to communicatively couple the UE 106 to the network 100. The eNodeB 110 can include one or more radio transceivers, a control module, a power supply, or processing circuitry. The eNodeB 110 can be configured to receive traffic load information about another eNodeB 110 within or near the transmission area of the first eNodeB 110. The eNodeB 110 can interface with another eNodeB 110 directly without a centralized intelligent controller, such as through an x2interface. The eNodeB 110 can include equipment to conduct spectrum filtering. The eNodeB 110 can send or receive a communication (e.g., LTE-A transmission 108). The communication can be transmitted across one or more frequencies or frequency subdivisions. Frequencies of operation can range from about 700 MHz up to 5 GHz or higher and can be divided into carrier bands ranging from about 1 MHz to 20MHz or more. The plurality of frequencies can facilitate one or more carriers using the same eNodeB 110. A carrier can be an organization providing communication and networking service, such as a network service provider, an internet service provider, or other entity offering network access. The eNodeB 110 can operate uplink communication, downlink communication, or any combination thereof. The eNodeB 110 can use a communication protocol, such as Orthogonal Frequency Division Multiple Access (OFDMA).

The eNodeB 110 can include one or more macro cells 102, such as to send or receive LTE-A transmissions 108 (e.g., to a UE 106), communicate with other eNodeBs 110, or communicate with an Evolved Packet Core (EPC). The eNodeB 110 of the macro cell 102 can communicate using one or more frequencies. A different frequency band can be used for each transmission layer. One frequency can be used for a transmission between the eNodeB 110 of the macro cell 102 and the UE 106. Another frequency can be used for a transmission between the eNodeB 110 of the small cell 104 and the UE 106, and yet other frequencies can be used for transmissions between other devices in the network 100.

The eNodeB 110 can include one or more small cells 104 that transmit with lower power (e.g., lower power relative to the macro cell 102), such as a femtocell, pico cell, micro cell, Home eNodeB (HeNB), or Relay Node (RN). The eNodeB 110 within the small cell 104 can be communicatively coupled to at least one eNodeB 110 of the macro cell 102. Using a lower power transmission from the eNodeB 110 within the small cell 104 can reduce interference with the transmission of the eNodeB 110 of the macro cell 102. The eNodeB 110 of the small cell 104 can have a transmission range that has an upper limit less than the upper limit of a transmission range of the macro cell 102. The upper limit of a range of the eNodeB 110 of the small cell 104 can be about two kilometers, while the eNodeB 110 of the macro cell 102 can have a transmission range upper of about ten kilometers or more.

The UE 106 can include a personal computer (PC) that can be portable, such as a notebook computer, a netbook, a tablet, a Personal Digital Assistant (PDA), a mobile telephone or Smartphone, or any device capable of communicating using the protocol of the cellular network 100. In an example, UE 106 can be non-portable, such as a set-top box (STB), a gaming console a web appliance, a network router, or a switch or bridge. In an example, the UE 106 can travel in and out of the transmission area of an eNodeB 110, such as the macro cell 102, such as the small cell 104 or PCell in which the UE 106 is performing RLM.

The LTE-A transmission 108 can include one or more transmissions, such as an EPDCCH transmission 210 (see FIG. 2), a PDCCH transmission 206 (see FIG. 2), a Physical Downlink Shared Channel (PDSCH) transmission 208 (see FIG. 2), or other transmission. The LTE-A transmission 108 can include the use of an Inter-Cell Interference Coordination (ICIC) technique. ICIC can improve the reliability of the EPDCCH transmission 210. In an example, the reliability of the EPDCCH transmission 210 can be improved using ICIC, such as by reducing the power of the LTE-A transmission 108 sent to a UE 106 in close proximity to the eNodeB 110 of the macro cell 102. The LTE-A transmission 108 (e.g., an EPDCCH transmission 210) can be sent with increased power from the eNodeB 110 of the macro cell 102 if the UE 106 is located further away, such as near the edge of the macro cell 102. The ICIC technique can include time domain ICIC, frequency domain ICIC, ICIC based on carrier aggregation, soft frequency reuse, hard frequency reuse, or other ICIC. In addition, ICIC can include the use of dedicated pilot symbols, user specific beam forming, Almost Blank Subframes (ABS), improved link adaptation, or other ICIC.

FIG. 2A illustrates a breakdown of the contents of the LTE-A transmission 108. The LTE-A transmission 108 can include one or more radio frames 202. Each radio frame 202 can include one or more subframes 204, such as shown in FIG. 2B. Each subframe 204 can be for a specific duration, such as one-millisecond. Each subframe 204 can include two slots 216, such as shown in FIG. 2C. Each slot 216 can include seven symbols 220. A resource block 214 can include one or more sub-carriers 218 (e.g., twelve subcarriers) and seven symbols 220.

A resource element 212 can include one sub-carrier and one symbol 220. The EPDCCH transmission 210 can provide one or more additional control channel resource elements to an LTE-A transmission 108, such as when the PDCCH transmission 206 resource elements 212 are in use. The EPDCCH transmission 210 can occupy a resource element 212 of the frequency-time resource block 214 previously allocated to a Physical Downlink Shared Channel (PDSCH) 208, such as resource elements 212 in symbols 220 three through six of the slot 216 (e.g., slot 1).

The control channel resource elements can include a PDCCH transmission 206 or EPDCCH transmission 210 resource element 212, or other control channel resource element. The EPDCCH transmission 210 can provide increased control channel flexibility within the network 100, such as by increasing the number of control channel resource elements within the LTE-A transmission 108. The EPDCCH transmission 210 resource elements 212 can be used to coordinate the PDSCH transmission 208 resource elements 212 (e.g., schedule the time and frequency of the PDSCH transmission 208). The EPDCCH transmission 210 can reduce interference with the PDCCH transmission 206 on another layer of the network 100, such as a transmission between the eNodeB 110 of the macro cell 102 and the eNodeB 110 of the small cell 104, the UE 106 and the eNodeB 110 of the small cell 104, the UE 106 and the eNodeB 110 of the macro cell 102, or between other components of the network 100. Interference among LTE-A transmissions 108 can be reduced, such as by the EPDCCH transmission 210 occupying a different symbol 220 or resource element 212 than the PDCCH transmission 206. FIG. 2C depicts EPDCCH transmission 210 resource elements 212 occupying a portion of symbols 220 three through thirteen and PDCCH transmission 206 resource elements 212 occupying symbols 220 zero through two.

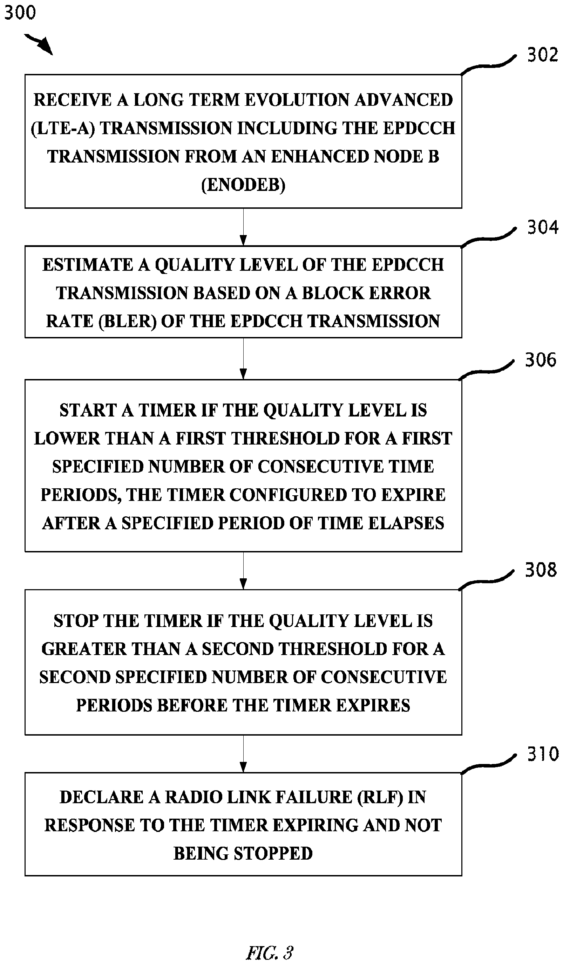

FIG. 3 illustrates a technique 300 for performing RLM based on an EPDCCH transmission 210. The technique 300 can include an LTE-A transmission 108 with one more resource elements 212, such as a resource element 212 allocated to an EPDCCH transmission 210. The LTE-A transmission 108 can be transmitted within the network 100 (e.g., HetNet). Determining RLM based on the EPDCCH transmission 210 can be done with or without regard to the PDCCH transmission 206 quality level of the LTE-A transmission 108. At 302, the UE 106 can receive an LTE-A transmission 108 including the EPDCCH transmission 210 from a first eNodeB 110. The first eNodeB 110 can be located, such as within the macro cell 102 or the small cell 104.

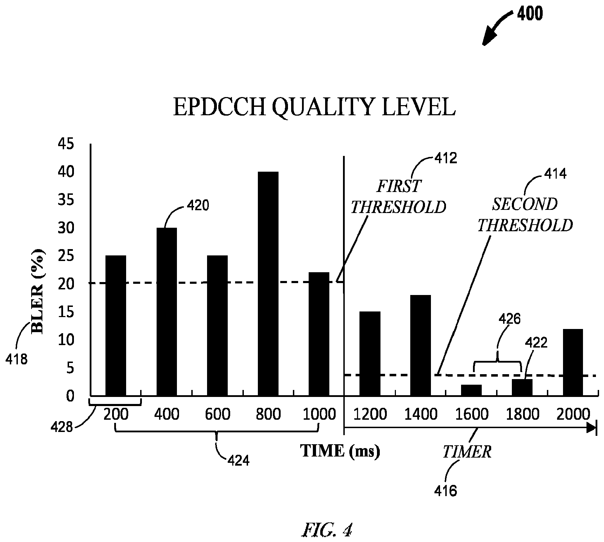

At 304, the UE 106 can estimate the quality level of the EPDCCH transmission 210 based on a BLock Error Rate (BLER) 418 (see FIG. 4) of the EPDCCH transmission 210. The BLER 418 can be determined by comparing the EPDCCH transmission 210 to one or more hypothetical transmissions, such as a hypothetical PDCCH transmission, a hypothetical EPDCCH transmission, or other transmission. The BLER 418 can be computed using methods, such as Common Reference Signal (CRS) tone quality, receipt of expected System Information Blocks (SIBs)(such as SIB1, SIBx, and paging messages), and by the ratio of Downlink Control Information (DCI) and resource element energy.

The quality level of the EPDCCH transmission 210 can be compared to one or more threshold values, such as to determine if the LTE-A transmission 108 can be reliably received. At 306, a timer 416 (see FIG. 4) can be started, such as by the UE 106 if the quality level is lower than a first threshold 412 for a first specified number 424 of consecutive time periods 428 (e.g., one or more consecutive time periods 428), the timer 416 configured to expire after a specified period of time elapses. The first threshold 412 value (see FIG. 4) can be BLER 418 at which an EPDCCH transmission 210 cannot be reliably received (e.g., Qₒᵤₜ, such as 10%, 20% or other value). A second threshold 414 value (see FIG. 4) can be the BLER 418 at which the EPDCCH transmission 210 can be significantly improved (e.g., Qᵢₙ, such as 2% or 4%, or other value), such as in comparison to the first threshold 412. The first threshold 412 and second threshold 414 can be configurable values (e.g., the BLER 418 specified by the eNodeB 110). The UE 106 can compare the quality level of the EPDCCH transmission 210 to the first threshold 412 to determine if the quality level of the EPDCCH transmission 210 is lower (e.g., the BLER 418 is greater 420) than the first threshold 412 (e.g., out-of-sync) for a first specified number 424 of one or more consecutive time periods 428, such as the constant N310 specified in 3GPP TS 36.331, section 7.4. In response to determining the quality level is lower than the first threshold 412 for a first specified number 424 of one or more consecutive time periods 428, the UE 106 can initiate a timer 416 (see FIG. 4), such as timer T310 defined in 3GPP TS 36.331, section 7.3.

After the timer 416 is started, the UE 106 can compare the quality level to a second threshold 414, such as to determine whether the quality level of the EPDCCH transmission 210 is greater (e.g., the BLER 418 is lower 422) than the second threshold 414 (e.g., in-sync) for a second specified number 426 of one or more consecutive time periods 428 (see FIG. 4), such as the constant N311 of 3GPP TS 36.331, section 7.4. The second threshold 414 (see FIG. 4) can be a BLER 418 at which the EPDCCH transmission 210 can be significantly improved (e.g., Qᵢₙ, such as 2% or 4%, or other value), such as in comparison to the first threshold 412. The UE 106 can determine whether the quality level of the EPDCCH transmission 210 is greater than a second threshold 414 for a second specified number 426 of one or more consecutive time periods 428 before the expiration of the timer 416.

At 308, the timer 416 can be stopped if the quality level is greater (e.g., the BLER 418 is lower 422) than a second threshold 414 for a second specified number 426 of one or more consecutive time periods 428 before the timer 416 expires.

At 310, the UE 106 can declare RLF in response to the timer 416 expiring and not being stopped. The timer 416 can expire if the quality level of the EPDCCH transmission 210 is lower (the BLER 418 is greater 420) than a second threshold 414 (e.g., not in-sync) for a second specified number 426 of one or more consecutive time periods 428. The second threshold 414 can be the BLER 418 at which the EPDCCH transmission 210 can be significantly improved (e.g., Qᵢₙ, such as 2% or 4%, or other value), such as in comparison to the first threshold 412.

FIG. 4 illustrates a graph 400 of a series of theoretical transmissions received at UE 106. The graph 400 depicts the BLER 418 as a percentage versus time in millisecond (e.g., one or more consecutive time periods 428 and timer 416). The graph 400 also depicts the first threshold 412 and the second threshold 414.

The BLER 418 can be higher (e.g., the EPDCCH transmission 210 quality level can be lower) than a first threshold 412 for a specified time period 428, such as 100 milliseconds, 200 milliseconds, 300 milliseconds, or other duration of time. The graph 400 depicts the time period 428, such as a number of milliseconds, for example 200 milliseconds. A timer 416 can be started and set to expire in a number of seconds, such as 50 milliseconds, 100 milliseconds, 200 milliseconds, or 2000 milliseconds if the BLER 418 is higher than a first threshold 412 for a first specified number 424 (e.g., 1, 5, 10, 20, or other positive integer value) of one or more consecutive time periods 428. FIG. 4 shows an example showing the first number 424 of one or more consecutive time periods 428 set to a value, such as five, where the quality level of the EPDCCH transmission 210 is lower (e.g., the BLER 418 of the EPDCCH transmission 210 is higher 420 than the first threshold 412) for five consecutive time periods 428. In response, the timer 416 can be started. The graph 400 depicts a timer 416 set to a value, such as 1000 milliseconds.

After the timer 416 is started, the UE 106 can determine whether the BLER 418 of the EPDCCH transmission 210 is less than a second threshold 414 for a second specified number 426 (e.g., 1, 2, 5, 10, or 20) of one or more consecutive time periods 428 (e.g., 100 milliseconds, 200 milliseconds, 300 milliseconds, or other duration of time). FIG. 4 depicts a BLER 418 that is less than a second threshold 414, such as having a quality level greater than the second threshold 414.

In one or more examples, the EPDCCH transmission 210 can have a BLER 418 lower than the second threshold 414 for the second specified number 426 of one or more consecutive time periods 428. In response to the EPDCCH transmission 210 having a BLER 418 lower than the second threshold 414 for the second specified number 426 of one or more consecutive time periods 428 the timer 416 can be stopped, such as before the timer 416 expires (e.g., before a specified period of time elapses). If the timer 416 is stopped, the UE 106 can return to comparing the quality level of EPDCCH transmission 210 to the first threshold 412 and determine whether the BLER 418 of the EPDCCH transmission 210 is greater than a first threshold 412 for a first specified number 424 of one or more consecutive time periods 428 (e.g., restart technique 300).

RLF can be declared by the UE 106 after the timer 416 expires, such as after timer 416 has been started and the EPDCCH transmission 210 has a BLER 418 greater than a second threshold 414 for a second specified number 426 of one or more consecutive time periods 428 before the timer 416 expires. In one or more examples, an RRC connection re-establishment procedure can be initiated by the UE 106, such as with an eNodeB 110, in response to the RLF declaration. The RRC connection re-establishment procedure can perform selection of a PCell (e.g., a macro cell 102 or small cell 104) for reconnection.

FIG. 4 can depict an example of a scenario where the UE 106 does not declare RLF, such as if the second number 426 of one or more consecutive time periods 428 is a value of two or less. Additionally or alternatively, FIG. 4 can depict an example where RLF is declared, such as if the value of the second number 426 of one or more consecutive time periods 428 equals a value greater than two.

In one or more examples, the UE 106 can compute the BLER 418 by comparing the quality level of the PDCCH transmission 206 to a hypothetical PDCCH transmission. The UE 106 can receive the EPDCCH transmission 210 more reliably than the PDCCH transmission 206. If RLM compares the PDCCH transmission 206 to a hypothetical PDCCH transmission, the threshold values used for determining the quality level of the EPDCCH transmission 210 can be set at a higher BLER 418, such as to help avoid an unnecessary RLF declaration.

The eNodeB 110 can signal to the UE 106 to use different thresholds (e.g., first threshold 412 or second threshold 414) for RLM. The signal from the eNodeB 110 can include a RadioResourceConfigDedicated information element (e.g., rlm-EPDCCH-rl2), such as to specify to the UE 106 to use different thresholds for RLM. The thresholds can be specified, such as in the Third Generation Partnership Project (3GPP) Technical Specifications (TS) 36.331, section 6.3.2, RadioResourceConfigDedicated information element, such as in the 3GPP TS 36.331 RadioResourceConfigDedicated field descriptions, such as in the 3GPP TS 36.133, section 7.6.1.

The threshold values, such as the first threshold 412 (e.g., Qₒᵤₜ) can be about twenty-percent BLER 418 of the hypothetical PDCCH transmission, whereas a second threshold 414 (e.g., Qᵢₙ) can be about four-percent BLER 418 of the hypothetical PDCCH transmission. The first threshold 412 and the second threshold 414 are configurable so as to allow them to be any value between 0 zero percent and 100% of BLER 418, or equivalent.

In one or more examples, the eNodeB 110 can signal to the UE 106 to use one or more different thresholds for RLM (e.g., the first threshold 412 or the second threshold 414), such as thresholds that are configurable by the eNodeB 110. The eNodeB 110 can set the first threshold 412 to be the BLER 418 of about ten-percent, twenty-percent, thirty-percent, or other value. The eNodeB 110 can set the second threshold 414 to be the BLER 418 of about two-percent, four-percent, six-percent, or other value. The signal from the eNodeB 110 can include a RadioResourceConfigDedicated information element (e.g., rlm-thresholds-r12), such as to specify to the UE 106 to use different thresholds for RLM.

In one or more examples, the UE 106 can compute the BLER 418 by comparing the quality level of the EPDCCH transmission 210 to a hypothetical PDCCH transmission. The UE 106 can receive the EPDCCH transmission 210 more reliably than the PDCCH transmission 206. The eNodeB 110 can signal to the UE 106 to use different thresholds (e.g., first threshold 412 or second threshold 414) for RLM. The signal from the eNodeB 110 can include a RadioResourceConfigDedicated information element (e.g., rlm-EPDCCH-rl2), such as to specify to the UE 106 to use different thresholds for RLM. The thresholds can be specified, such as in the Third Generation Partnership Project (3GPP) Technical Specifications (TS) 36.331, section 6.3.2, RadioResourceConfigDedicated information element, such as in the 3GPP TS 36.331 RadioResourceConfigDedicated field descriptions, such as in the 3GPP TS 36.133, section 7.6.1.

If RLM compares the EPDCCH transmission 210 to a hypothetical PDCCH transmission, the threshold values used for comparing the quality level of the EPDCCH transmission 210 can be set at a higher BLER 418, such as to help avoid an unnecessary RLF declaration. The threshold values, such as the first threshold 412 (e.g., Qₒᵤₜ) can be about twenty-percent BLER 418 of the hypothetical PDCCH transmission, whereas a second threshold 414 (e.g., Qᵢₙ) can be about four-percent BLER 418 of the hypothetical PDCCH transmission. The first threshold 412 and the second threshold 414 are configurable so as to allow them to be any value between 0 zero percent and 100% of BLER 418, or equivalent.

In one or more examples, the eNodeB 110 can signal to the UE 106 to use one or more different thresholds for RLM, such as the first threshold 412 or the second threshold 414. The eNodeB 110 can set the first threshold 412 to be the BLER 418 of about ten-percent, twenty-percent, thirty-percent, or other value. The eNodeB 110 can set the second threshold 414 to be the BLER 418 of about two-percent, four-percent, six-percent, or other value. The signal from the eNodeB 110 can include a RadioResourceConfigDedicated information element (e.g., rlm-thresholds-r12), such as to specify to the UE 106 to use different thresholds for RLM.

In one or more examples, the UE 106 can compute the BLER 418 by comparing the quality level of the EPDCCH transmission 210 to a hypothetical EPDCCH transmission. The first threshold 412 or second threshold 414 for RLM can be specified, such as in the 3GPP TS 36.331 or 3GPP TS 36.133. The thresholds (e.g., threshold 412 or threshold 414) used for RLM based on EPDCCH can be similar to the thresholds used for RLM based upon the PDCCH transmission 206, such as the BLER 418 (e.g., the BLER 418 based on the hypothetical EPDCCH transmission) that the EPDCCH transmission 210 can be reliably received can be similar to the BLER 418 value (e.g., the BLER 418 based on a hypothetical PDCCH transmission) that the PDCCH transmission 206 can be reliably received. The first threshold 412 can be about ten-percent BLER 418 of the hypothetical EPDCCH transmission, whereas the second threshold 414 can be about two-percent BLER 418 of the hypothetical EPDCCH transmission. In one or more examples, the first threshold 412 or second threshold 414 can be configured, such as by the eNodeB 110 specifying the values for the first threshold 412 or second threshold 414. The signal from the eNodeB 110 can include a RadioResourceConfigDedicated information element (e.g., rlm-EPDCCH-r12), such as to specify to the UE 106 to use different thresholds for RLM.

In one or more examples, the eNodeB 110 can signal to the UE 106 to disable RLM, such as where the EPDCCH transmission 210 can be reliably received by the UE 106, such as where ICIC can improve the ability of the UE 106 to reliably receive (e.g., the BLER 418 is lower than a threshold) the EPDCCH transmission 210. The signal from the eNodeB 110 can include a RadioResourceConfigDedicated information element (e.g., rlm-Disable-r12), such as to specify to the UE 106 to use disable RLM.

The UE 106 cannot declare RLF as a result of RLM being disabled (e.g., the UE 106 can skip the technique 300 for performing RLM). Disabling RLM can be specified, such as in the 3GPP TS 36.331, section 6.3.2, RadioResourceConfigDedicated information element; such as in the 3GPP TS 36.331, RadioResourceConfigDedicated field descriptions; such as in the 3GPP TS 36.133, section 7.6.1.

In one or more examples, the UE 106 can perform RLM based on Radio Resource Control (RRC) signaling from the eNodeB 110. The eNodeB 110 can signal the UE 106 to perform RLM based upon a BLER 418, such as the BLER 418 that compares an EPDCCH transmission 210 to a hypothetical PDCCH transmission. The BLER 418 (e.g. a first threshold 412) can be about twenty-percent of the hypothetical PDCCH transmission, or the BLER 418 (e.g. a second threshold 414) can be about four-percent BLER 418 of the hypothetical PDCCH transmission. The eNodeB 110 can signal the UE 106 to perform RLM based upon a BLER 418, such as the BLER 418 that compares an EPDCCH transmission 210 to a hypothetical EPDCCH transmission. The BLER 418 (e.g. a first threshold 412) can be about ten-percent of the hypothetical EPDCCH transmission, or the BLER 418 (e.g. a second threshold 414) can be about two-percent BLER 418 of the hypothetical EPDCCH transmission. RRC can also signal the eNodeB 110 to disable RLM. The signal from the eNodeB 110 can include a RadioResourceConfigDedicated information element (e.g., rlm-control-r12), such as to specify to the UE 106 to use different thresholds for RLM. The rlm-control-r12 information element can be set to one or more values, such as to disable RLM (e.g. ENUMERATED {disable}), such as to base RLM on EPDCCH (e.g., ENUMERATED {epdcch}), such as to base RLM on PDCCH (e.g., ENUMERATED {pdcch}).

In one or more examples, the eNodeB 110 can signal to the UE 106 to specify the value of the first number 424 of one or more consecutive time periods 428 or the second number 426 of one or more consecutive time periods 428, such as the number of time periods used to start the timer 416 or the number of time periods used to stop the timer 416. The eNodeB 110 can signal to the UE 106 to set the duration of the timer 416, such as to change the duration of time wherein the BLER 418 must be lower than a second threshold 414 for a second number 426 of one or more consecutive time periods 428 before declaring RLF. The first number 424 of one or more consecutive time periods 428, second number 426 of one or more consecutive time periods 428, or duration of the timer 416 can be specified, such as in the 3GPP TS 36.331, section 6.3.2, RadioResourceConfigDedicated information element, such as in the 3GPP TS 36.331 RadioResourceConfigDedicated field descriptions, such as in the 3GPP TS 36.133, section 7.6.1. The signal from the eNodeB 110 can include a RadioResourceConfigDedicated information element, such as to specify to the UE 106 to set the value of the first number 424 of one or more consecutive time periods 428 or the second number 426 of one or more consecutive time periods 428. The information element can specify to the UE 106 to set the duration of the timer 416.

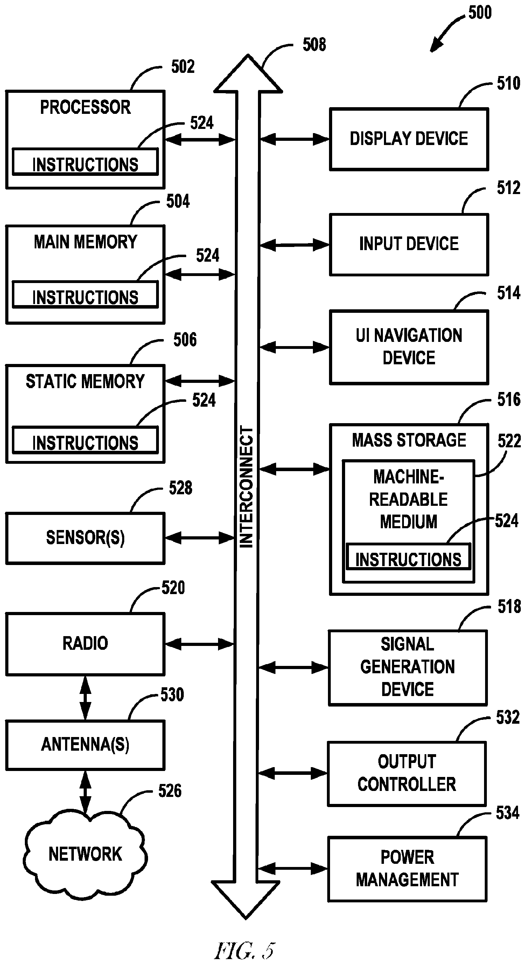

FIG. 5 is a block diagram illustrating an example computer system 500, such as a machine, upon which any one or more of the techniques herein discussed can be run, such as a computer system implemented in the UE 106 or eNodeB 110. Computer system 500 can be a computing device, providing operations of the UE 106, eNodeB 110 or any other processing or computing platform or component described or referred to herein. In an example, the machine can operate as a standalone device or can be connected (e.g., via the cellular network 100 or HetNet) to other machines. In a networked deployment, the machine can operate in the capacity of either a server or a client machine in server-client network environments, or it can act as a peer machine in peer-to-peer (or distributed) network environments. The computer system machine can be a UE 106 or eNodeB 110, such as a personal computer (PC) that can be portable, such as a notebook computer, a netbook, a tablet, a Personal Digital Assistant (PDA), a mobile telephone or Smartphone, or any machine capable of executing instructions (sequential or otherwise) that specify actions to be taken by that machine. The computer system machine can be non-portable, such as a set-top box (STB), a gaming console a web appliance, a network router, or a switch or bridge. Further, while only a single machine is illustrated, the term "machine" shall also be taken to include any collection of machines that individually or jointly execute a set (or multiple sets) of instructions to perform any one or more of the methodologies discussed herein.

Example computer system 500 can include a processor 502 (e.g., a Central Processing Unit (CPU), a Graphics Processing Unit (GPU) or both), a main memory 504 and a static memory 506, which communicate with each other via an interconnect 508 (e.g., a link, a bus, etc.). The computer system 500 can further include a video display unit 510, an alphanumeric input device 512 (e.g., a keyboard), and a User Interface (UI) navigation device 514 (e.g., a mouse). In an example, the video display unit 510, input device 512 and UI navigation device 514 are a touch screen display. The computer system 500 can additionally include a computer readable storage device 516 (e.g., a drive unit), a signal generation device 518 (e.g., a speaker), an output controller 532, a power management controller 534, and a radio 520 (which can include or operably communicate with one or more antennas 530, transceivers, or other wireless communications hardware), and one or more sensors 528, such as a GPS sensor, compass, location sensor, accelerometer, or other sensor.

The storage device 516 can include a non-transitory machine-readable medium 522 on which can be stored one or more sets of data structures and instructions 524 (e.g., software) embodying or utilized by any one or more of the methodologies or functions described herein. The instructions 524 can also reside, completely or at least partially, within the main memory 504, static memory 506, or within the processor 502 during execution thereof by the computer system 500, with the main memory 504, static memory 506, and the processor 502 also constituting machine-readable media.

While the machine-readable medium 522 is illustrated in an example embodiment to be a single medium, the term "machine-readable medium" can include a single medium or multiple media (e.g., a centralized or distributed database, and/or associated caches and servers) that store the one or more instructions 524. The term "machine-readable medium" shall also be taken to include any tangible medium that can be capable of storing, encoding or carrying instructions for execution by the machine and that cause the machine to perform any one or more of the methodologies of the present disclosure or that can be capable of storing, encoding or carrying data structures utilized by or associated with such instructions. The term "machine-readable medium" shall accordingly be taken to include, but not be limited to, solid-state memories, optical media, and magnetic media. Specific examples of machine-readable media include nonvolatile memory, including, by way of example, semiconductor memory devices (e.g., Electrically Programmable Read-Only Memory (EPROM), Electrically Erasable Programmable Read-Only Memory (EEPROM)) and flash memory devices; magnetic disks such as internal hard disks and removable disks; magneto-optical disks; and CD-ROM and DVD-ROM disks.

The instructions 524 can further be transmitted or received over a network 100 using a transmission medium via the radio 520 utilizing any one of a number of well-known transfer protocols (e.g., OFDMA, SC-FDMA, TDMA, TDMA, CDMA, or other channel access method. The term "transmission medium" shall be taken to include any intangible medium that can be capable of storing, encoding, or carrying instructions for execution by the machine, and includes digital or analog communications signals or other intangible medium to facilitate communication of such software.

### EXAMPLES AND NOTES

The present subject matter can be described by way of several examples not falling under the scope of the claims.

Example 1 can include or use subject matter (such as an apparatus, a method, a means for performing acts, or a device readable memory including instructions that, when performed by the device, can cause the device to perform acts), such as can include or use a User Equipment (UE) configured to perform Radio Link Monitoring (RLM), such as on an Enhanced Physical Downlink Control Channel (EPDCCH) transmission in a Heterogeneous Network (HetNet), such as without regard to a Physical Downlink Control Channel (PDCCH) quality level. The UE can be configured, such as to receive a Long Term Evolution Advanced (LTE-A) transmission including the EPDCCH transmission from an Enhanced Node B (eNodeB), such as to estimate a quality level of the EPDCCH transmission based on a BLock Error Rate (BLER) of the EPDCCH transmission, such as to start a timer (e.g., the timer configured to expire after a specified period of time elapses) if the quality level can be lower than a first threshold for a first specified number of consecutive time periods, such as to stop the timer if the quality level can be greater than a second threshold for a second specified number of consecutive time periods before the timer expires, such as to declare a Radio Link Failure (RLF) in response to the timer expiring and not being stopped.

Example 2 can include or use, or can optionally be combined with the subject matter of Example 1, to include or use wherein the UE is configured to, such as in response to the RLF declaration, initiate a Radio Resource Control (RRC) connection re-establishment procedure with the eNodeB.

Example 3 can include or use, or can optionally be combined with the subject matter of at least one of Examples 1-2, to include or use wherein the BLER is determined by comparing a PDDCH transmission of the LTE-A transmission to a hypothetical PDCCH transmission.

Example 4 can include or use, or can optionally be combined with the subject matter of at least one of Examples 1-3, to include or use wherein the first threshold is twenty-percent, or the second threshold is four-percent.

Example 5 can include or use, or can optionally be combined with the subject matter of at least one of Examples 1-4, to include or use wherein the UE is configured to receive RRC signaling from the eNodeB, such as specifying the UE to perform one or more operations, comprising basing RLM on a PDCCH transmission, basing RLM on the EPDCCH transmission, disabling RLM, or specifying the values for the first threshold or the second threshold.

Example 6 can include or use, or can optionally be combined with the subject matter of at least one of Examples 1-5, to include or use wherein the BLER is determined by comparing the EPDCCH transmission to a hypothetical EPDCCH transmission.

Example 7 can include or use, or can optionally be combined with the subject matter of at least one of Examples 1-6, to include or use wherein the first threshold is ten-percent or the second threshold is two-percent.

Example 8 can include or use, or can be optionally be combined with the subject matter of at least one of Examples 1-7, to include subject matter (such as an apparatus, a method, a means for performing acts, or a device readable memory including instructions that, when performed by the device, can cause the device to perform acts), such as can include or use (1) receiving an LTE-A transmission including an EPDCCH transmission from an eNodeB, (2) estimating a quality level of the EPDCCH transmission, such as based on a BLER of the EPDCCH transmission, (3) starting a timer (e.g., the timer configured to expire after a specified period of time elapses) if the quality level can be lower than a first threshold for a first specified number of consecutive time periods, (4) stopping the timer if the quality level can be greater than a second threshold for a second specified number of consecutive time periods before the timer expires, or (5) declaring a RLF, such as in response to the timer expiring and not being stopped.

Example 9 can include or use, or can optionally be combined with the subject matter of at least one of Examples 1-8, to include or use initiating a RRC connection re-establishment procedure with the eNodeB, such as in response to the RLF declaration.

Example 10 can include or use, or can optionally be combined with the subject matter of at least one of Examples 1-9, to include or use wherein the BLER is determined by comparing a PDDCH transmission of the LTE-A transmission to a hypothetical PDCCH transmission.

Example 11 can include or use, or can optionally be combined with the subject matter of at least one of Examples 1-10, to include or use wherein the first threshold is twenty-percent or the second threshold is four-percent.

Example 12 can include or use, or can optionally be combined with the subject matter of at least one of Examples 1-11, to include or use receiving RRC signaling from the eNodeB specifying the UE to perform one or more operations comprising basing RLM on a PDCCH transmission, basing RLM on the EPDCCH transmission, disabling RLM, or specifying the values for the first threshold or the second threshold.

Example 13 can include or use, or can optionally be combined with the subject matter of at least one of Examples 1-12, to include or use wherein the BLER that can be determined by comparing the EPDCCH transmission to a hypothetical EPDCCH transmission.

Example 14 can include or use, or can optionally be combined with the subject matter of at least one of Examples 1-13, to include or use wherein the first threshold is ten-percent or the second threshold is two-percent.

Example 15 can include or use, or can be optionally be combined with the subject matter of at least one of Examples 1-14, to include subject matter (such as an apparatus, a method, a means for performing acts, or a device readable memory including instructions that, when performed by the device, can cause the device to perform acts), such as can include or (1) receiving an LTE-A transmission including an EPDCCH transmission from an eNodeB, (2) estimating a quality level of the EPDCCH transmission based on a BLER of the EPDCCH transmission, (3) starting a timer (e.g., the timer configured to expire after a specified period of time elapses) if the quality level can be lower than a first threshold for a first specified number of consecutive time periods, (4) stopping the timer if the quality level can be greater than a second threshold for a second specified number of consecutive time periods before the timer expires, (5) or declaring a RLF in response to the timer expiring and not being stopped.

Example 16 can include or use, or can optionally be combined with the subject matter of at least one of Examples 1-15, to include or use initiating an RRC connection re-establishment procedure with the eNodeB in response to the RLF declaration.

Example 17 can include or use, or can optionally be combined with the subject matter of at least one of Examples 1-16, wherein the BLER is determined by comparing a PDDCH transmission of the LTE-A transmission to a hypothetical PDCCH transmission.

Example 18 can include or use, or can optionally be combined with the subject matter of at least one of Examples 1-17, to include or use wherein the first threshold is twenty-percent or the second threshold is four-percent.

Example 19 can include or use, or can optionally be combined with the subject matter of at least one of Examples 1-18, to include or use instructions, which when executed by the machine, can cause the machine to perform operations including receiving RRC signaling from the eNodeB specifying the UE to perform one or more operations comprising basing RLM on a PDCCH transmission, basing RLM on the EPDCCH transmission, disabling RLM, or specifying the values for the first threshold or the second threshold.

Example 20 can include or use, or can optionally be combined with the subject matter of at least one of Examples 1-19, to include or use the BLER determined by comparing the EPDCCH transmission to a hypothetical EPDCCH transmission.

Example 21 can include or use, or can optionally be combined with the subject matter of at least one of Examples 1-20, to include or use wherein the first threshold is ten-percent or the second threshold is two-percent.

Example 22 can include or use, or can be optionally be combined with the subject matter of at least one of Examples 1-21, to include subject matter (such as an apparatus, a method, a means for performing acts, or a device readable memory including instructions that, when performed by the device, can cause the device to perform acts), such as can include or use a radio; a processor communicatively coupled to the radio; a memory coupled to the processor, wherein the memory can include instructions stored thereon, which when executed by the processor, can cause the processor to perform operations for RLM of an EPDCCH transmission; the operations include: (1) receiving an LTE-A transmission including the EPDCCH transmission from an eNodeB, (2) estimating a quality level of the EPDCCH transmission based on a BLER of the EPDCCH transmission, (3) starting a timer (e.g., the timer configured to expire after a specified period of time elapses) if the quality level can be lower than a first threshold for a first specified number of consecutive time periods, (4) stopping the timer if the quality level can be greater than a second threshold for a second specified number of consecutive time periods before the timer expires, (5) or declaring a RLF in response to the timer expiring and not being stopped.

Example 23 can include or use, or can optionally be combined with the subject matter of at least one of Examples 1-22, to include or use wherein the BLER is determined by comparing a PDDCH transmission of the LTE-A transmission to a hypothetical PDCCH transmission.

Example 24 can include or use, or can optionally be combined with the subject matter of at least one of Examples 1-23, to include or use wherein the BLER is determined by comparing the EPDCCH transmission to a hypothetical EPDCCH transmission.

Example 25 can include or use, or can optionally be combined with the subject matter of at least one of Examples 1-24, to include or use wherein the UE is configured to receive RRC signaling from the eNodeB specifying the values for the first threshold or the second threshold.

Example 26 can include or use, or can be optionally be combined with the subject matter of at least one of Examples 1-25, to include or use a machine readable medium including instructions, which when executed by a machine, can cause the machine to perform operations of any one of the methods in examples 8-14.

Example 27 can include or use, or can be optionally be combined with the subject matter of at least one of Examples 1-26, to include or use an apparatus comprising means for performing any one of the methods of Examples 8-14.

Example 28 can include or use, or can be optionally be combined with the subject matter of at least one of Examples 1-27, to include subject matter (such as an apparatus, a method, a means for performing acts, or a device readable memory including instructions that, when performed by the device, can cause the device to perform acts), such as can include or use a computer readable storage device including instructions stored thereon, the instructions, which when executed by a machine, can cause the machine to perform operations including receiving a Radio Resource Control (RRC) signal that configures the machine to disable Radio Link Monitoring (RLM).

Example 29 can include or use, or can be optionally be combined with the subject matter of at least one of Examples 1-28, to include subject matter (such as an apparatus, a method, a means for performing acts, or a device readable memory including instructions that, when performed by the device, can cause the device to perform acts), such as can include or use a UE configured to receive a RRC signal that configures the machine to disable RLM.

Example 30 can include or use, or can be optionally be combined with the subject matter of at least one of Examples 1-29, to include subject matter (such as an apparatus, a method, a means for performing acts, or a device readable memory including instructions that, when performed by the device, can cause the device to perform acts), such as can include or use a User Equipment (UE) configured to perform Radio Link Monitoring (RLM), such as on a Physical Downlink Control Channel (EPDCCH) transmission in a Heterogeneous Network (HetNet), such as to determine a quality level of an Enhanced Physical Downlink Control Channel (EPDCCH) transmission. The UE can be configured, such as to receive an LTE-A transmission including the EPDCCH transmission from an Enhanced Node B (eNodeB), such as to estimate a quality level of the EPDCCH transmission based on a BLock Error Rate (BLER) of the PDCCH transmission, such as to start a timer (e.g., the timer configured to expire after a specified period of time elapses) if the quality level can be lower than a first threshold for a first specified number of consecutive time periods, such as to stop the timer if the quality level can be greater than a second threshold for a second specified number of consecutive time periods before the timer expires, such as to declare a Radio Link Failure (RLF) in response to the timer expiring and not being stopped.

Example 31 can include or use, or can optionally be combined with the subject matter of Examples 1-30, to include or use wherein the UE is configured, such as in response to the RLF declaration, to initiate a Radio Resource Control (RRC) connection re-establishment procedure with the eNodeB.

Example 32 can include or use, or can optionally be combined with the subject matter of at least one of Examples 1-31, to include or use wherein the BLER is determined by comparing a PDDCH transmission of the LTE-A transmission to a hypothetical PDCCH transmission.

Example 33 can include or use, or can optionally be combined with the subject matter of at least one of Examples 1-32, to include or use wherein the first threshold is twenty-percent or the second threshold is four-percent.

Example 34 can include or use, or can be optionally be combined with the subject matter of at least one of Examples 1-33, to include subject matter (such as an apparatus, a method, a means for performing acts, or a device readable memory including instructions that, when performed by the device, can cause the device to perform acts), such as can include or use (1) receiving an LTE-A transmission including an EPDCCH transmission from an eNodeB, (2) estimating a quality level of the EPDCCH transmission, such as based on a BLER of a PDCCH transmission, (3) starting a timer (e.g., the timer configured to expire after a specified period of time elapses) if the quality level can be lower than a first threshold for a first specified number of consecutive time periods, (4) stopping the timer if the quality level can be greater than a second threshold for a second specified number of consecutive time periods before the timer expires, (5) or declaring a RLF, such as in response to the timer expiring and not being stopped.

Example 35 can include or use, or can optionally be combined with the subject matter of at least one of Examples 1-34, to include or use initiating a RRC connection re-establishment procedure with the eNodeB, such as in response to the RLF declaration.

Example 36 can include or use, or can optionally be combined with the subject matter of at least one of Examples 1-35, to include or use wherein the BLER is determined by comparing a PDDCH transmission of the LTE-A transmission to a hypothetical PDCCH transmission.

Example 37 can include or use, or can optionally be combined with the subject matter of at least one of Examples 1-36, to include or use wherein the first threshold is twenty-percent or the second threshold is four-percent.

Example 38 can include or use, or can be optionally be combined with the subject matter of at least one of Examples 1-37, to include subject matter (such as an apparatus, a method, a means for performing acts, or a device readable memory including instructions that, when performed by the device, can cause the device to perform acts), such as can include or use (1) receiving an LTE-A transmission including an EPDCCH transmission from an eNodeB, (2) estimating a quality level of the EPDCCH transmission based on a BLER of a PDCCH transmission, (3) starting a timer (e.g., the timer configured to expire after a specified period of time elapses) if the quality level can be lower than a first threshold for a first specified number of consecutive time periods, (4) stopping the timer if the quality level can be greater than a second threshold for a second specified number of consecutive time periods before the timer expires, (5) or declaring a RLF in response to the timer expiring and not being stopped.

Example 39 can include or use, or can optionally be combined with the subject matter of at least one of Examples 1-38, to include or use instructions, which when executed by the machine can cause the machine to perform operations including initiating a RRC connection re-establishment procedure with the eNodeB in response to the RLF declaration.

Example 40 can include or use, or can optionally be combined with the subject matter of at least one of Examples 1-39, to include or use wherein the BLER is determined by comparing a PDDCH transmission of the LTE-A transmission to a hypothetical PDCCH transmission.

Example 41 can include or use, or can optionally be combined with the subject matter of at least one of Examples 1-40, to include or use wherein the first threshold is twenty-percent or the second threshold is four-percent.

Example 42 can include or use, or can be optionally be combined with the subject matter of at least one of Examples 1-41, to include subject matter (such as an apparatus, a method, a means for performing acts, or a device readable memory including instructions that, when performed by the device, can cause the device to perform acts), such as can include a radio; a processor communicatively coupled to the radio; a memory coupled to the processor, wherein the memory can include instructions stored thereon, which when executed by the processor, can cause the processor to perform operations for RLM of a PDCCH transmission, such as to determine a quality level of an EPDCCH transmission; the operations include: (1) receiving an LTE-A transmission including the EPDCCH transmission from an eNodeB, (2) estimating a quality level of the EPDCCH transmission based on a BLER of the PDCCH transmission, (3) starting a timer (e.g., the timer configured to expire after a specified period of time elapses) if the quality level can be lower than a first threshold for a first specified number of consecutive time periods, (4) stopping the timer if the quality level can be greater than a second threshold for a second specified number of consecutive time periods before the timer expires, (5) or declaring a RLF in response to the timer expiring and not being stopped.

Example 43 can include or use, or can optionally be combined with the subject matter of at least one of Examples 1-42, to include or use wherein the UE is further configured to, in response to the RLF declaration, initiate a Radio Resource Control (RRC) connection re-establishment procedure with the eNodeB.

Example 44 can include or use, or can optionally be combined with the subject matter of at least one of Examples 1-43, to include or use wherein the BLER is determined by comparing a PDDCH transmission of the LTE-A transmission to a hypothetical PDCCH transmission.

Example 45 can include or use, or can optionally be combined with the subject matter of at least one of Examples 1-44, to include or use the first threshold is twenty-percent or the second threshold is four-percent.

Example 46 can include or use, or can optionally be combined with the subject matter of at least one of Examples 1-45, to include or use wherein the BLER is determined by comparing the EPDCCH transmission to a hypothetical EPDCCH transmission.

Example 47 can include or use, or can optionally be combined with the subject matter of at least one of Examples 1-46, to include or use wherein the first threshold is ten-percent or the second threshold is two-percent.

Example 48 can include or use, or can optionally be combined with the subject matter of at least one of Examples 1-47, to include or use wherein the UE is configured to receive a signal from the eNodeB specifying the value of the first number of one or more consecutive time periods or the second number of one or more consecutive time periods.

Example 49 can include or use, or can optionally be combined with the subject matter of at least one of Examples 1-48, to include or use wherein the UE is configured to receive a signal, such as from the eNodeB specifying a duration of the timer.

Example 50 can include or use, or can optionally be combined with the subject matter of at least one of Examples 1-49, to include or use receiving a signal from the eNodeB specifying the value of the first number of one or more consecutive time periods or the second number of one or more consecutive time periods.

Example 51 can include or use, or can optionally be combined with the subject matter of at least one of Examples 1-50, to include or use receiving a signal from the eNodeB specifying a duration of the timer.

Example 52 can include or use, or can optionally be combined with the subject matter of at least one of Examples 1-51, to include or use instructions, which when executed by the machine can cause the machine to perform operations including receiving a signal from the eNodeB specifying the value of the first number of one or more consecutive time periods or the second number of one or more consecutive time periods.

Example 53 can include or use, or can optionally be combined with the subject matter of at least one of Examples 1-52, to include or use instructions, which when executed by the machine can cause the machine to perform operations including receiving a signal from the eNodeB specifying the duration of the timer.

The above detailed description includes references to the accompanying drawings, which form a part of the detailed description. The drawings show, by way of illustration, specific embodiments in which methods, apparatuses, and systems discussed herein can be practiced. These embodiments are also referred to herein as "examples." Such examples can include elements in addition to those shown or described. However, the present inventors also contemplate examples in which only those elements shown or described are provided. Moreover, the present Applicants also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) can be used in combination with each other. Other embodiments can be used, such as by one of ordinary skill in the art upon reviewing the above description. Also, in the above Detailed Description, various features can be grouped together to streamline the disclosure. This should not be interpreted as intending that an unclaimed disclosed feature is essential to any claim. The scope of the invention is defined by the appended claims.

## Claims

1. A User Equipment (106), UE, configured to perform Radio Link Monitoring, RLM, on an Enhanced Physical Downlink Control Channel, EPDCCH, transmission (210) in a Heterogeneous Network, HetNet, without regard to a Physical Downlink Control Channel, PDCCH, quality level, the UE configured to:
receive a Long Term Evolution Advanced, LTE-A, transmission (108) including the EPDCCH transmission from an Enhanced Node B (110), eNodeB;
estimate a quality level of the EPDCCH transmission based on a Block Error Rate, BLER, of the EPDCCH transmission, wherein the BLER is determined by comparing the EPDCCH transmission to one of a hypothetical PDCCH transmission and a hypothetical EPDCCH transmission;
start a timer (416) if the quality level is lower than a first threshold (412) for a first specified number of consecutive time periods, the timer configured to expire after a specified period of time elapses;
stop the timer if the quality level is greater than a second threshold (414) for a second specified number of consecutive time periods before the timer expires; and
declare a Radio Link Failure, RLF, in response to the timer expiring and not being stopped.

2. The UE of claim 1, wherein the UE is further configured to, in response to the RLF declaration, initiate a Radio Resource Control, RRC, connection re-establishment procedure with the eNodeB.

3. The UE of claim 1, wherein the first threshold is twenty-percent and the second threshold is four-percent BLER of the hypothetical PDCCH transmission, when the BLER of the EPDCCH transmission is determined by comparing the EPDCCH transmission to the hypothetical PDCCH transmission.

4. The UE of any one of claims 1-3, wherein the UE is further configured to receive RRC signaling from the eNodeB specifying the UE to perform one or more operations comprising basing RLM on a PDCCH transmission, basing RLM on the EPDCCH transmission, disabling RLM, or specifying the values for the first threshold and the second threshold.

5. A method of Radio Link Monitoring, RLM, performed by a User Equipment, UE, comprising:
receiving a Long Term Evolution Advanced, LTE-A, transmission including an EPDCCH transmission from an Enhanced Node B, eNodeB,;
estimating a quality level of the EPDCCH transmission based on a Block Error Rate, BLER, of the EPDCCH transmission, wherein the BLER is determined by comparing the EPDCCH transmission to one of a hypothetical PDCCH transmission and a hypothetical EPDCCH transmission;
starting a timer if the quality level is lower than a first threshold for a first specified number of consecutive time periods, the timer configured to expire after a specified period of time elapses;
stopping the timer if the quality level is greater than a second threshold for a second specified number of consecutive time periods before the timer expires; and
declaring a Radio Link Failure,RLF, in response to the timer expiring and not being stopped.

6. The method of claim 5, further comprising initiating a Radio Resource Control, RRC, connection re-establishment procedure with the eNodeB in response to the RLF declaration.

7. The method of any one of claims 5-6, further comprising receiving RRC signaling from the eNodeB specifying the UE to perform one or more operations comprising basing RLM on a PDCCH transmission, basing RLM on the EPDCCH transmission, disabling RLM, or specifying the values for the first threshold and the second threshold.

8. The method of claim 5, wherein the first threshold is twenty-percent and the second threshold is four-percent BLER of the hypothetical PDCCH transmission, when the BLER of the EPDCCH transmission is determined by comparing the EPDCCH transmission to the hypothetical PDCCH transmission.

9. The method of claim 5, wherein the first threshold is ten-percent and the second threshold is two-percent BLER of the hypothetical EPDCCH transmission, when the BLER of the EPDCCH transmission is determined by comparing the EPDCCH transmission to the hypothetical EPDCCH transmission.

10. A machine readable medium including instructions, which when executed by a machine, cause the machine to perform operations of any one of the method claims 5-9.

## Patentansprüche

1. Benutzerausrüstung (106), UE, konfiguriert zum Durchführen von Funkverbindungsüberwachung, RLM, in einer erweiterten physikalischen Abwärtsstrecken-Steuerkanal- bzw. EPDCCH-Übertragung (210) in einem heterogenen Netzwerk, HetNet, ohne Berücksichtigung eines Qualitätsniveaus eines physikalischen Abwärtsstrecken-Steuerkanals, PDCCH, die UE konfiguriert zum:
Empfangen einer erweiterten Langzeitevolution- bzw. LTE-A-Übertragung (108), enthaltend die EPDCCH-Übertragung von einem erweiterten B-Knoten (110), eNodeB;
Schätzen eines Qualitätsniveaus der EPDCCH-Übertragung basierend auf einer Blockfehlerrate, BLER, der EPDCCH-Übertragung, wobei die BLER durch Vergleichen der EPDCCH-Übertragung mit einer einer hypothetischen PDCCH-Übertragung und einer hypothetischen EPDCCH-Übertragung bestimmt wird;
Starten eines Zeitgebers (416), wenn das Qualitätsniveau niedriger ist als ein erster Schwellenwert (412) für eine erste spezifizierte Anzahl aufeinanderfolgender Zeitperioden, wobei der Zeitgeber konfiguriert ist, nach einer spezifizierten Periode von Zeitabläufen abzulaufen;
Stoppen des Zeitgebers, wenn das Qualitätsniveau größer ist als ein zweiter Schwellenwert (414) für eine zweite spezifizierte Anzahl von aufeinanderfolgenden Zeitperioden, bevor der Zeitgeber abläuft; und
Erklären eines Funkverbindungsfehlers, RLF, als Reaktion darauf, dass der Zeitgeber abläuft und nicht gestoppt wurde.

2. UE nach Anspruch 1, wobei die UE ferner konfiguriert ist zum, als Reaktion auf die RLF-Erklärung, Einleiten einer Funkbetriebsmittelsteuerung- bzw. RRC-Verbindungswiederherstellungsprozedur mit dem eNodeB.

3. UE nach Anspruch 1, wobei der erste Schwellenwert zwanzig Prozent beträgt und der zweite Schwellenwert vier Prozent BLER der hypothetischen PDCCH-Übertragung beträgt, wenn die BLER der EPDCCH-Übertragung durch Vergleichen der EPDCCH-Übertragung mit der hypothetischen PDCCH-Übertragung bestimmt wird.

4. UE nach einem der Ansprüche 1-3, wobei die UE ferner konfiguriert ist zum Empfangen von RRC-Signalisierung von dem eNodeB, die spezifiziert, dass die UE eine oder mehrere Operationen durchführt, umfassend Basieren von RLM auf einer PDCCH-Übertragung, Basieren von RLM auf der EPDCCH-Übertragung, Deaktivieren von RLM oder Spezifizieren der Werte für den ersten Schwellenwert und den zweiten Schwellenwert.

5. Verfahren der Funkverbindungsüberwachung, RLM, durchgeführt durch eine Benutzerausrüstung, UE, umfassend:
Empfangen einer erweiterten Langzeitevolution- bzw. LTE-A-Übertragung, enthaltend eine EPDCCH-Übertragung von einem erweiterten B-Knoten, eNodeB;
Schätzen eines Qualitätsniveaus der EPDCCH-Übertragung basierend auf einer Blockfehlerrate, BLER, der EPDCCH-Übertragung, wobei die BLER durch Vergleichen der EPDCCH-Übertragung mit einer einer hypothetischen PDCCH-Übertragung und einer hypothetischen EPDCCH-Übertragung bestimmt wird;
Starten eines Zeitgebers, wenn das Qualitätsniveau niedriger ist als ein erster Schwellenwert für eine erste spezifizierte Anzahl aufeinanderfolgender Zeitperioden, wobei der Zeitgeber konfiguriert ist, nach einer spezifizierten Periode von Zeitabläufen abzulaufen;
Stoppen des Zeitgebers, wenn das Qualitätsniveau größer ist als ein zweiter Schwellenwert für eine zweite spezifizierte Anzahl von aufeinanderfolgenden Zeitperioden, bevor der Zeitgeber abläuft; und
Erklären eines Funkverbindungsfehlers, RLF, als Reaktion darauf, dass der Zeitgeber abläuft und nicht gestoppt wurde.

6. Verfahren nach Anspruch 5, ferner umfassend Einleiten einer Funkbetriebsmittelsteuerung- bzw. RRC-Verbindungswiederherstellungsprozedur mit dem eNodeB als Reaktion auf die RLF-Erklärung.

7. Verfahren nach einem der Ansprüche 5-6, ferner umfassend Empfangen von RRC-Signalisierung von dem eNodeB, die spezifiziert, dass die UE eine oder mehrere Operationen durchführt, umfassend Basieren von RLM auf einer PDCCH-Übertragung, Basieren von RLM auf der EPDCCH-Übertragung, Deaktivieren von RLM oder Spezifizieren der Werte für den ersten Schwellenwert und den zweiten Schwellenwert.

8. Verfahren nach Anspruch 5, wobei der erste Schwellenwert zwanzig Prozent beträgt und der zweite Schwellenwert vier Prozent BLER der hypothetischen PDCCH-Übertragung beträgt, wenn die BLER der EPDCCH-Übertragung durch Vergleichen der EPDCCH-Übertragung mit der hypothetischen PDCCH-Übertragung bestimmt wird.

9. Verfahren nach Anspruch 5, wobei der erste Schwellenwert zehn Prozent beträgt und der zweite Schwellenwert zwei Prozent BLER der hypothetischen EPDCCH-Übertragung beträgt, wenn die BLER der EPDCCH-Übertragung durch Vergleichen der EPDCCH-Übertragung mit der hypothetischen EPDCCH-Übertragung bestimmt wird.

10. Maschinenlesbares Medium, enthaltend Anweisungen, die, wenn sie durch eine Maschine ausgeführt werden, bewirken, dass die Maschine Operationen nach einem der Verfahrensansprüche 5-9 durchführt.

## Revendications

1. Équipement utilisateur (106), UE, configuré pour exécuter une surveillance de liaison radio, RLM, sur une transmission de canal de contrôle de liaison descendante physique amélioré, EPDCCH, (210) dans un réseau hétérogène, HetNet, sans égard pour le niveau de qualité d'un canal de contrôle de liaison descendante physique, PDCCH, l'UE étant configuré pour :
recevoir une transmission d'évolution à long terme avancée, LTE-A, (108), comprenant la transmission EPDCCH depuis un noeud B (110), eNodeB ;
estimer un niveau de qualité de la transmission EPDCCH sur la base d'un taux d'erreurs sur les blocs, BLER, de la transmission EPDCCH, où le BLER est déterminé en comparant la transmission EPDCCH à une transmission parmi une transmission PDCCH hypothétique et une transmission EPDCCH hypothétique ;
démarrer une minuterie (416) si le niveau de qualité est inférieur à un premier seuil (412) pour un premier nombre spécifié de périodes de temps consécutives, la minuterie étant configurée pour expirer après qu'une période de temps spécifiée s'est écoulée ;
arrêter la minuterie si le niveau de qualité est supérieur à un second seuil (414) pendant un second nombre spécifié de périodes de temps consécutives avant l'expiration de la minuterie ; et
déclarer une panne de liaison radio, RLF, en réponse à l'expiration de la minuterie et au fait qu'elle n'est pas arrêtée.

2. UE selon la revendication 1, dans lequel l'UE est en outre configuré pour, en réponse à la déclaration RLF, initier une procédure de rétablissement de la connexion de contrôle des ressources radio, RRC, avec l'eNodeB.

3. UE selon la revendication 1, dans lequel le premier seuil est un BLER de vingt pour cent et le second seuil est un BLER de quatre pour cent de la transmission hypothétique PDCCH, lorsque le BLER de la transmission EPDCCH est déterminé en comparant la transmission EPDCCH à la transmission PDCCH hypothétique.

4. UE selon l'une quelconque des revendications 1 à 3, dans lequel l'UE est en outre configuré pour recevoir une signalisation RRC provenant de l'eNodeB spécifiant l'UE pour exécuter une ou plusieurs opérations comprenant de baser une RLM sur une transmission PDCCH, de baser une RLM sur la transmission EPDCCH, de désactiver la RLM, ou de spécifier les valeurs pour le premier seuil et le second seuil.

5. Procédé de surveillance de liaison radio, RLM, exécuté par un équipement utilisateur, UE, comprenant les étapes suivantes :
recevoir une transmission d'évolution à long terme avancée, LTE-A, comprenant une transmission EPDCCH depuis un noeud B amélioré, eNodeB ;
estimer un niveau de qualité de la transmission EPDCCH sur la base d'un taux d'erreurs sur les blocs, BLER, de la transmission EPDCCH, où le BLER est déterminé en comparant la transmission EPDCCH à une transmission parmi une transmission PDCCH hypothétique et une transmission EPDCCH hypothétique ;
démarrer une minuterie si le niveau de qualité est inférieur à un premier seuil pour un premier nombre spécifié de périodes de temps consécutives, la minuterie étant configurée pour expirer après qu'une période de temps spécifiée s'est écoulée ;
arrêter la minuterie si le niveau de qualité est supérieur à un second seuil pendant un second nombre spécifié de périodes de temps consécutives avant l'expiration de la minuterie ; et
déclarer une panne de liaison radio, RLF, en réponse à l'expiration de la minuterie et au fait qu'elle n'est pas arrêtée.

6. Procédé selon la revendication 5, comprenant en outre d'initier une procédure de rétablissement de la connexion de contrôle des ressources radio, RRC, avec l'eNodeB en réponse à la déclaration RLF.

7. Procédé selon l'une quelconque des revendications 5 à 6, comprenant en outre de recevoir une signalisation RRC provenant de l'eNodeB spécifiant l'UE pour exécuter une ou plusieurs opérations comprenant de baser une RLM sur une transmission PDCCH, de baser une RLM sur la transmission EPDCCH, de désactiver la RLM, ou de spécifier les valeurs pour le premier seuil et le second seuil.

8. Procédé selon la revendication 5, dans lequel le premier seuil est un BLER de vingt pour cent et le second seuil est un BLER de quatre pour cent de la transmission hypothétique PDCCH, lorsque le BLER de la transmission EPDCCH est déterminé en comparant la transmission EPDCCH à la transmission PDCCH hypothétique.

9. Procédé selon la revendication 5, dans lequel le premier seuil est un BLER de dix pour cent et le second seuil est un BLER de deux pour cent de la transmission hypothétique EPDCCH, lorsque le BLER de la transmission EPDCCH est déterminé en comparant la transmission EPDCCH à la transmission EPDCCH hypothétique.

10. Support lisible par machine comprenant des instructions qui, lorsqu'elles sont exécutées par une machine, amènent la machine à exécuter les opérations de l'une quelconque des revendications de procédé 5 à 9.
